# EUROPEAN PATENT SPECIFICATION

(11) **EP 2 130 807 B1**
(45) Date of publication and mention of the grant of the patent: **06.06.2012**
(21) Application number: 08172537.6
(22) Date of filing: 22.12.2008
(51) Int. Cl.: C04B 35/111, C04B 35/80, C04B 35/626, C04B 38/00, C04B 35/18, B01D 39/20, B01J 35/04, F01N 3/022, F01N 3/28

(54) **Honeycomb structure**
Wabenstruktur
Structure en nid d'abeille

(30) Priority: 20.05.2008 WO PCT/JP2008/059266
(43) Date of publication of application: 09.12.2009
(73) Proprietor: Ibiden Co., Ltd., Ogaki-shi, Gifu 503-8604 (JP)
(72) Inventor: Ohno, Kazushige, Ibi-Gun, Gifu 501-0695 (JP); Kunieda, Masafumi, Ibi-Gun, Gifu 501-0695 (JP); Ido, Takahiko, Ibi-Gun, Gifu 501-0695 (JP)
(74) Representative: HOFFMANN EITLE

(56) References cited:
- EP-A- 0 425 061
- EP-A- 0 661 094
- EP-A- 1 707 545
- EP-A- 1 830 043
- EP-A- 1 927 392
- EP-A1- 0 756 891
- JP-A- 61 171 539
- US-A- 5 116 586

## Description

### BACKGROUND OF THE INVENTION

### 1. Field of the Invention

The present invention relates to honeycomb structures.

### 2. Description of the Related Art

While various technologies have been developed for the conversion of automobile exhaust gases, there has never been a fully satisfactory exhaust gas control measure in place, partly due to the ever-increasing traffic. Automobile exhaust gas regulations are headed for further tightening, both domestically and globally. Among others, regulations of NOx in diesel exhaust gases are being enforced with increasing severity. Conventionally, NOx reduction has been attempted by controlling the engine combustion systems, but now such method is proving ineffective. Against this background, a diesel NOx conversion system has been proposed which is based on a NOx reduction system (called a selective catalytic reduction (SCR) system), where ammonia is used as a reducing agent.

As a vehicle-mounted catalyst used in such a system, a honeycomb structure containing zeolite as a catalyst component is known. Generally, honeycomb structures containing zeolite have low strength. Japanese Laid-Open Patent Application No. 61-171539 discloses a honeycomb structure containing zeolite having an inorganic fiber content of 5 to 30 wt%. The zeolite-containing honeycomb structure with inorganic fibers is capable of preventing the development of a crack during firing.

WO2006/040874 A1 discloses a honeycomb structure containing ceramic particles and inorganic fibers, where the aspect ratio of the inorganic fibers is set to be equal to or greater than (the tension strength of the fibers (GPa)/0.3), so that an improved bending strength of the honeycomb structure can be obtained.

European patent application EP 1 927 392 A1 discloses honeycomb units extruded from a material paste containing at most 20.3 wt% β-zeolite particles, γ-alumina particles, silica sol as an inorganic binder and aluminate borate fibers having a diameter of 0.5-1 µm and a length of 10-30 µm.

Concerning the aforementioned conventional honeycomb structures, if inorganic fibers with excessive lengths are present in the extrusion-molding step of a conventional honeycomb structure manufacturing process, the fibers may be severed in the extrusion molding machine. If this happens, desired lengths of the fibers cannot be maintained, thus adversely affecting the strength-improving effect of the inorganic fibers. Even when the fibers are not severed, the fibers may fail to sufficiently disperse among the particles of zeolite, for example, and flocculate instead, thereby accumulating at a portion of the die at the outlet of the extrusion molding machine. As a result, a defect may be caused in the cell walls, making it necessary to stop the extrusion step and clean the die.

### SUMMARY OF THE INVENTION

It is a general object of the present invention to provide a honeycomb structure having a sufficient strength as a vehicle-mounted exhaust gas conversion catalyst and containing inorganic fibers that minimize the development of a defect in cell walls.

The invention provides a honeycomb structure with the features of claim 1.

The inorganic fibers have an average fiber length in a range of from 30 to 150 µm and an average fiber diameter in a range of from 4 to 7 µm.

In another preferred embodiment, the inorganic fibers include at least one of alumina fibers, silica fibers, silicon carbide fibers, silica alumina fibers, glass fibers, potassium titanate fibers, or aluminum borate fibers.

In another preferred embodiment, the inorganic particles include at least one of alumina, titania, silica, zirconia, or ceria in addition to zeolite.

In another preferred embodiment, the zeolite includes secondary particles, the secondary particles of zeolite having an average particle size in a range of from 0.5 to 10 µm.

In another preferred embodiment, the zeolite includes at least one of zeolite β, zeolite Y, ferrierite, ZSM-5, mordenite, faujasite, zeolite A, or zeolite L.

In yet another preferred embodiment, the zeolite has a silica to alumina molar ratio in a range of from 30:1 to 50:1.

In another embodiment, the zeolite is ion-exchanged with at least one of Fe, Cu, Ni, Co, Zn, Mn, Ti, Ag, or V.

In another embodiment, the inorganic binder includes at least one of alumina sol, silica sol, titania sol, liquid glass, sepiolite sol, or attapulgite sol.

The cell wall has a thickness in a range of from 0.15 to 0.35 mm.

In another preferred embodiment, a plurality of the honeycomb units are joined by interposing an adhesive material.

In accordance with an embodiment, there is provided a honeycomb structure that has a sufficient strength as a vehicle-mounted exhaust gas conversion catalyst and that contains inorganic fibers with which the development of a defect in cell walls can be minimized.

### BRIEF DESCRIPTION OF THE DRAWINGS

These and other objects, features and advantages of the invention will be apparent to those skilled in the art from the following detailed description of the invention, when read in conjunction with the accompanying drawings in which:
FIG. 1A shows a perspective view of a honeycomb structure comprising plural honeycomb units according to an embodiment of the present invention;
FIG. 1B shows a perspective view of a honeycomb structure comprising a single honeycomb unit according to another embodiment of the present invention;
FIG. 2 shows a perspective view of a honeycomb unit which is a component of the honeycomb structure shown in FIG. 1A;
FIG. 3 shows a graph indicating length distributions of inorganic fibers; and
FIG. 4 shows a graph indicating relationships between the length distribution of inorganic fibers and the bending strength of honeycomb units of honeycomb structures according to Examples 1 to 6 and Comparative Example 1.

### DETAILED DESCRIPTION OF THE PREFERRED EMBODIMENTS

A honeycomb structure according to an embodiment of the present invention includes one or more fired honeycomb units containing inorganic particles, an inorganic binder, and inorganic fibers. The honeycomb unit includes a plurality of cells extending from one end face of the unit to another end face in a longitudinal direction thereof, where the cells are divided by cell walls.

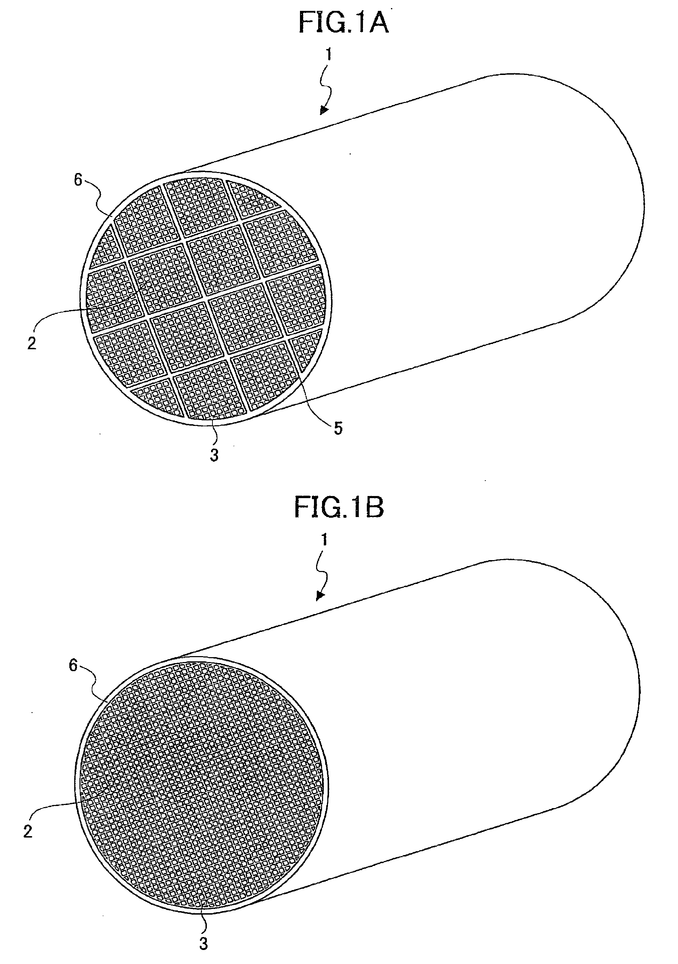

An example of the honeycomb structure is shown in a perspective view in FIG. 1A. The honeycomb structure 1 shown in FIG. 1A includes a plurality of honeycomb units 2 that are joined by interposing an adhesive material 5. Each of the honeycomb units 2 is formed such that cells 3 are disposed parallel to the longitudinal direction of the honeycomb units 2. Preferably, the sides of the honeycomb structure 1 (parallel to the longitudinal direction of the cells) are coated with a coating material layer 6 for maintaining a required strength.

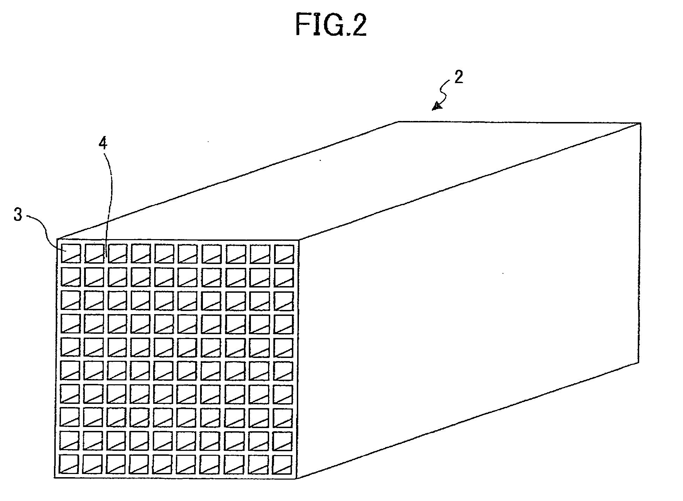

FIG. 2 shows a perspective view of the honeycomb unit 2. As shown, the cells 3 extend in a longitudinal direction and are divided by cell walls 4.

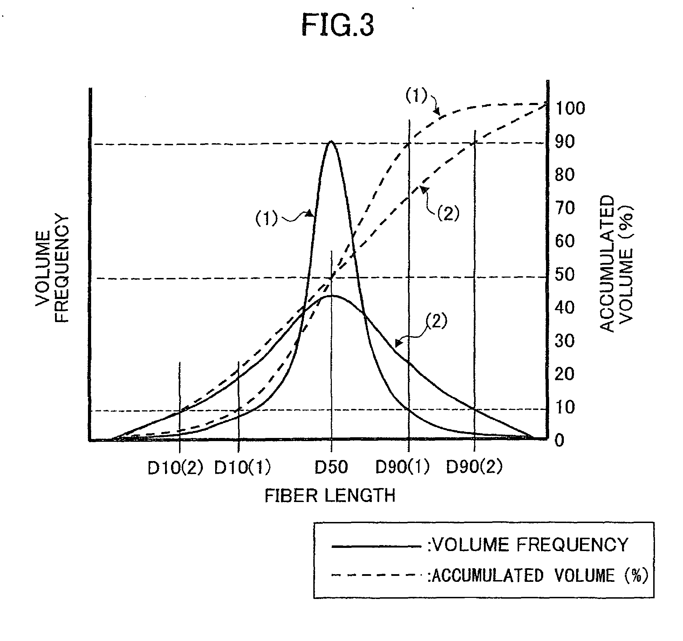

In accordance with the present embodiment, the inorganic fibers have a length distribution such that the value of (D90-D10)/D50 is two or less, where D10 is a fiber length at 10% by volume, D50 is a fiber length at 50% by volume ("average fiber length"), and D90 is a fiber length at 90% by volume, where D10 < D50 < D90. FIG. 3 shows a graph illustrating different inorganic fiber length distributions. In the graph, the horizontal axis shows the length of the inorganic fibers, and the vertical axis shows the volume frequency and the accumulated volume of the inorganic fibers. The solid lines show the volume frequency, and the dashed lines show the accumulated volume. As will be seen from the graph of FIG. 3, inorganic fibers (1) have a smaller value of (D90-D10)/D50 (i.e., the width between D90(1) and D10(1) is narrower) than that of inorganic fibers (2). Thus, the distribution of the fiber lengths of the inorganic fibers (1) is smaller than that of the inorganic fibers (2) having a larger value of (D90-D10)/D50 (i.e., the width between D90(2) and D10(2) is greater).

Inorganic fibers where the value of D90-D10)/D50 of two or less have relatively uniform lengths, and a honeycomb unit containing such inorganic fibers can provide an enhanced strength improving effect.
Thus, by using such inorganic fibers, a sufficient strength can be obtained in a honeycomb unit containing inorganic particles of zeolite, for example, that tend to result in a reduced strength. A honeycomb structure having such a honeycomb unit can provide a sufficient strength as a vehicle-mounted catalyst or the like.

An extrusion molding raw-material composition that contains inorganic fibers where the value of (D90-D10)/D50 is two or less do not contain excessively long fibers. Thus, such a composition when used for molding a honeycomb is less likely to suffer from the problems of the flocculation of the inorganic fibers or the severing of the fibers by the extruding screws. Furthermore, the problem of the fibers clogging the die of the extrusion molding machine and thereby producing a defective shape of the honeycomb unit can be prevented.

Thus, by using inorganic fibers where the value of (D90-D10)/D50, which indicates the length distribution of the inorganic fibers, is two or less as a raw material, a honeycomb unit for a honeycomb structure in accordance with an embodiment of the present invention can be readily made.

A lower limit of the value of (D90-D10)/D50 is not particularly defined. However, in order to obtain the value of less than 0.5, it is necessary to manufacture inorganic fibers having a very sharp fiber length distribution. Thus, a realistic lower limit of the value is 0.5 or greater or 1.0 or greater from the viewpoint of manufacture of the raw material inorganic fibers.
The average fiber length and average fiber diameter of the inorganic fibers are in the ranges of from 30 to 150 µm and from 4 to 7 µm, respectively. When the average fiber length of the inorganic fibers is less than 30 µm, a sufficient strength improving effect of the honeycomb unit may not be obtained. When the average fiber length of the inorganic fibers exceeds 150 µm, the fibers may flocculate so that a sufficient strength improving effect may not be achieved. If the average fiber length exceeds 150 µm at the raw material stage, the fibers may be severed in the extrusion molding machine, or they may flocculate and clog the die.

### (Honeycomb Unit)

In accordance with an embodiment, the honeycomb unit, as shown in FIG. 2, has a number of cells 3 (through holes) disposed in parallel to the longitudinal direction of the honeycomb unit. The cross sectional shape of the individual cells 3 in the honeycomb unit is not particularly limited. While FIG. 2 shows the example in which the cross section of the cells 3 is square, the cross section may be substantially triangular, hexagonal, circular, or a combination of a square and an octagon or the like, for example.

The thickness of the cell wall is 0.15 mm or greater and 0.35 mm or less, and preferably 0.15 mm or greater and 0.27 mm or less. When the thickness of the cell wall is less than 0.15 mm, a sufficient strength of the honeycomb unit may not be maintained. When the thickness of the cell wall exceeds 0.35 mm, the exhaust gas may not be able to permeate inside the cell walls, resulting in a decrease in NOx conversion performance.

Preferably, the porosity of the cell walls of the honeycomb unit is in a range of from 20 to 40% and more preferably from 25 to 40%. From the quantitative viewpoint, when the porosity is less than 20%, the exhaust gas may fail to sufficiently reach deep inside the cell walls, resulting in an insufficient NOx conversion rate. If the porosity exceeds 40%, the strength of the cell walls may decrease.

Preferably, an opening ratio, which is the areal ratio of the openings in a cross section (where the cells have openings) perpendicular to the longitudinal direction along which the cells of the honeycomb unit are arranged, is 50% to 65%. The ratio is preferably 50% or greater in order not to increase pressure loss. The ratio is preferably 65% or less in order to ensure a quantity of cell walls necessary for achieving a sufficient catalyst conversion performance.

The honeycomb unit of the honeycomb structure according to an embodiment includes inorganic particles, an inorganic binder, and inorganic fibers.

### (Inorganic Particles)

In a honeycomb structure, the honeycomb unit includes inorganic particles including zeolite as a main raw material for a substrate (cell wall). The inorganic particles may also provide a catalyst function. The inorganic particles contained in the honeycomb unit are not particularly limited, excepting zeolite. Examples of the inorganic particles added to zeolite include alumina, silica, zirconia, titania, ceria, mullite, and their precursors. Among those mentioned above, alumina, such as γ alumina or boehmite, or zirconia is preferable. These different kinds of inorganic particles may be used individually or in combination. A preferable example of inorganic particles that have a catalyst function is zeolite.

In the honeycomb structure, when zeolite and other inorganic particles are used as raw material, preferably the particles strongly bind to each other based on a dehydrating condensation reaction upon firing of alumina or zirconia. Also preferably, the inorganic particles other than zeolite have an average particle size of their secondary particles that is equal to or smaller than the average particle size of the secondary particles of zeolite. Particularly, the average particle size of the inorganic particles other than zeolite is preferably 10% to 100% of the average particle size of zeolite. In this way, an enhanced strength of the honeycomb unit can be obtained by the binding force of the inorganic particles having a small average particle size.

The content of the inorganic particles contained in the honeycomb unit other than zeolite is preferably in a range of from 3 to 30 mass% and more preferably in a range of from 5 to 20 mass%. When the content of the inorganic particles other than zeolite is less than 3 mass%, a sufficient contribution to the improvement in strength cannot be obtained. When the content of the inorganic particles other than zeolite exceeds 30 mass%, the content of zeolite that contributes to NOx conversion becomes relatively small, resulting in poor NOx conversion performance.

### (Zeolite)

The zeolite in the honeycomb unit includes zeolite particles that are bound by an inorganic binder or inorganic particles. Examples of zeolite include zeolite β, zeolite Y, ferrierite, ZSM-5, mordenite, faujasite, zeolite A, and zeolite L. These examples may be used either individually or in combination.

Preferably, the molar ratio of silica to alumina (silica/alumina) is in a range of from 30 to 50.

Another preferable example is an ion-exchanged zeolite obtained by ion-exchanging any of the aforementioned zeolites. A honeycomb unit may be formed by using zeolite that is ion-exchanged in advance; alternatively, zeolite may be ion-exchanged after a honeycomb unit is formed. A preferable example of the ion-exchanged zeolite is zeolite ion-exchanged with at least one of metal species Fe, Cu, Ni, Co, Zn, Mn, Ti, Ag, or V. These metal species may be used either individually or in combination in the ion-exchanged zeolite.

The zeolite content per apparent unit volume of the honeycomb unit is preferably 230 g/L or more and more preferably 245 to 270 g/L. When the zeolite content per unit volume of the honeycomb unit is less than 230 g/L, NOx conversion performance may decrease. When the zeolite content exceeds 270 g/L, a sufficient strength of the honeycomb unit or the honeycomb structure may not be maintained.

In accordance with the present embodiment, the content (composition ratio) of zeolite in the honeycomb unit is 60 to 80 mass%. The content of zeolite in the honeycomb unit is 60 mass% or more because zeolite contributes to NOx conversion. However, if the zeolite content alone is increased in excess of 80 mass%, the content of other constituent substances (such as inorganic fibers or inorganic binder) would have to be reduced, resulting in a decrease in honeycomb unit strength. If the opening ratio of the honeycomb unit is reduced too much in order to increase the zeolite content, flow resistance against the exhaust gas during NOx conversion reaction may become excessive.

The zeolite includes secondary particles, of which the average particle size is preferably in a range of from 0.5 to 10 µm. The average particle size of the secondary particles may be measured by measuring the raw material zeolite particles that form the secondary particles before firing of the honeycomb unit.

### (Inorganic Binder)

Because the honeycomb unit is a calcined product, only a solid content of the inorganic-binder-derived components remains in the honeycomb unit, the moisture of the inorganic binder having been evaporated. Thus, the term "inorganic binder" in the honeycomb unit is intended to refer to the solid content of the inorganic binder. The inorganic binder at the raw material stage may include an inorganic sol or a clay-based binder or the like. Examples of the inorganic sol are alumina sol, silica sol, titania sol, sepiolite sol, attapulgite sol, liquid glass and the like. Examples of the clay-based binder are white clay, kaolin, montmorillonite, branched-chain structure clay (such as sepiolite and attapulgite) and the like.
These inorganic sols or clay-based binders may be used individually or in combination.

### (Inorganic Fibers)

In accordance with the present embodiment, the honeycomb unit contains inorganic fibers. Non-limiting examples of the inorganic fiber contained in the honeycomb unit include one or more kinds of inorganic fibers selected from alumina fibers, silica fibers, silicon carbide fibers, silica alumina fibers, glass fibers, potassium titanate fibers, and aluminum borate fibers. These inorganic fibers contribute to the improvement of the strength of the honeycomb unit. The inorganic fibers may contain short fibers such as whiskers as well as long fibers. The fiber length of the inorganic fibers, the fiber diameter, and the fiber length distribution ((D90-D10)/D50) are as described above.

The features of the inorganic fibers in the honeycomb unit in terms of shape are defined by the aspect ratio as well as the length distribution, average fiber length, and average fiber diameter of the fibers as described above. Inorganic fibers are inorganic material with large aspect ratios (fiber length/fiber diameter). Generally, the inorganic fibers are effective in enhancing the bending strength of the honeycomb structure. The aspect ratio of the inorganic fibers is preferably in a range of from 2 to 1000, more preferably from 5 to 800, and particularly preferably from 10 to 500. When the aspect ratio is less than two, sufficient contribution to the improvement in honeycomb structure strength may not be obtained. When the aspect ratio exceeds 1000, poor moldability may result due to the clogging of the die (mold) during molding, or the inorganic fibers may break during extrusion molding or the like, resulting in variations in length and a decrease in honeycomb unit strength. When the aspect ratio of the inorganic fibers has a certain distribution, the aspect ratio refers to an average value.

The content of the inorganic fibers contained in the honeycomb unit is preferably in a range of from 3 to 50 mass%, more preferably from 3 to 30 mass%, and particularly preferably from 5 to 20 mass%. When the inorganic fiber content is less than 3 mass%, a sufficient contribution to the improvement in honeycomb structure strength may not be obtained. When the content exceeds 50 mass%, the relative amount of zeolite that contributes to NOx conversion decreases, resulting in a poor NOx conversion performance of the honeycomb structure.

### (Catalyst Component)

The cell walls of the honeycomb unit in the honeycomb structure according to an embodiment may further support a catalyst component. Non-limiting examples of the catalyst component include a noble metal, an alkali metal compound, and an alkaline earth metal compound. Examples of the noble metal include one or more kinds selected from platinum, palladium, and rhodium. Examples of the alkali metal compound include one or more kinds of compounds selected from potassium, sodium, and the like. An example of the alkaline earth metal compound is barium or the like.

### (Manufacturing of Honeycomb Unit)

A method for manufacturing the honeycomb unit of the honeycomb structure according to an embodiment is described. First, a raw-material paste including the above-described zeolite, inorganic fibers, and inorganic binder as main components is prepared. The material paste is then extrusion-molded, for example, to obtain a honeycomb unit molded body.

The inorganic fibers have a length distribution such that the value of (D90-D10)/D50 is two or less, where D10 is the fiber length at 10% by volume, D50 is the fiber length at 50% by volume, and D90 is the fiber length at 90% by volume, where D10 < D50 < D90.

The average fiber length of the inorganic fibers is in a range of from 30 to 150 µm, and the average fiber diameter is in a range of from 4 to 7 µm. When the average fiber length and the average fiber diameter are in these ranges, various problems that interfere with the strength improving effect of the inorganic fiber can be prevented. For example, these ranges prevent the severing of the inorganic fibers during extrusion molding, clogging of the die by flocculation of the inorganic fibers, or the defective dispersion of the inorganic fibers in the completed honeycomb unit. A desired length distribution of the inorganic fibers may be obtained by classification based on pulverization or sieving.

To the material paste, there may be further added inorganic particles other than the aforementioned zeolite, an organic binder, a pore-forming agent, a dispersion medium, a forming aid or the like as needed. Non-limiting examples of the organic binder include one or more kinds of organic binders selected from methylcellulose, carboxymethyl cellulose, hydroxyethyl cellulose, polyethyleneglycol, phenol resin, and epoxy resin.

The amount of the organic binder added is preferably in a range of from 1 to 10 parts by mass with respect to a total of 100 parts by mass of the solid content of the entire raw material. The pore-forming agent may be a powder of resin such as acrylic acid resin, polyolefin resin, polystyrene resin, or polyester resin.

The organic binder and the pore-forming agent play important roles for the adjustment of extrusion forming property or the porosity of the honeycomb unit. The amount of the pore-forming agent may be increased or decreased depending on the desired porosity. Non-limiting examples of the dispersion medium include water, an organic solvent (such as toluene), and alcohol (such as methanol). Non-limiting examples of the forming aid include ethylene glycol, dextrin, fatty acid soap, and polyalcohol.

The material paste, which is not particularly limited, is preferably mixed using a mixer or kneaded using an attritor, or sufficiently kneaded with a kneader or the like, for example. The method of forming the material paste is not particularly limited and may preferably involve extrusion molding to form the material paste into a shape having cells.

The resultant honeycomb unit molded body is then dried using a drying apparatus which is not particularly limited. Non-limiting examples of the drying apparatus include a microwave drying apparatus, a hot air drying apparatus, dielectric drying apparatus, reduced-pressure drying apparatus, vacuum drying apparatus, freeze drying apparatus and the like. The dried honeycomb unit molded body is preferably degreased. The degreasing conditions are not particularly limited and may be selected as appropriate depending on the kind or amount of organic matter contained in the molded body. Preferably, the honeycomb unit molded body is degreased at 400°C for about two hours.

The dried and degreased honeycomb unit molded body is further calcined under conditions that are not particularly limited and may preferably include a temperature range of from 600 to 1200°C and more preferably from 600 to 1000°C. When the firing temperature is less than 600°C, sintering of zeolite may not proceed sufficiently, thereby failing to enhance the strength of the honeycomb unit. When the firing temperature exceeds 1200°C, the zeolite crystal may collapse, or sintering may proceed so much that a porous honeycomb unit with an appropriate porosity may not be manufactured.

### (Honeycomb Structure)

The honeycomb structure may include one or more honeycomb units. In the case of a honeycomb structure with plural honeycomb units, the honeycomb units are stacked so that the through holes of the cells in the individual honeycomb units are oriented in the same direction. FIGs. 1A and 1B show two examples of the honeycomb structure in perspective views.

In the honeycomb structure 1 shown in FIG. 1A, plural honeycomb units 2 are joined by interposing an adhesive material 5. In each honeycomb unit 2, the cells 3 are arranged in parallel with the longitudinal direction of the honeycomb units. FIG. 1B shows the example where the honeycomb structure 1 constitutes a single honeycomb unit 2. Thus, the honeycomb structure 1 may be constructed of either a single honeycomb unit 2 or plural honeycomb units 2. Preferably, the sides of the honeycomb structure 1 (parallel to the longitudinal direction of the cells) is coated with a coating material layer 6 for maintaining a necessary strength.

While the honeycomb structures shown in FIGs. 1A and 1B each have a circular cross section, the cross section of the honeycomb structure according to other embodiments of the invention may be square, rectangular, hexagonal, sectoral or the like. While the cross sectional shape of the honeycomb structure may be determined depending on the particular manner of use, the honeycomb unit preferably has the same cross sectional area throughout the length of the unit. The outer periphery of the honeycomb structure may be either cut or not cut.

### (Manufacturing of Honeycomb Structure)

First, a description is given of a process of manufacturing of a honeycomb structure having plural honeycomb units as shown in FIG. 1A. The sides of the honeycomb units obtained by the foregoing process are coated with adhesive material, and the honeycomb units are successively joined. The joined assembly of the honeycomb units is dried and solidified, obtaining a honeycomb unit joined assembly with a predetermined size. The sides of the honeycomb unit joined assembly are cut to obtain a desired shape.

Non-limiting examples of the adhesive material include a mixture of an inorganic binder and inorganic particles, a mixture of an inorganic binder and inorganic fibers, and a mixture of an inorganic binder with inorganic particles and inorganic fibers. An organic binder may be further added to the adhesive material. Non-limiting examples of the organic binder include one or more kinds of inorganic binders selected from polyvinyl alcohol, methylcellulose, ethylcellulose, and carboxymethyl cellulose.

The thickness of the adhesive material layer, via which the plural honeycomb units are joined, is preferably 0.5 to 2 mm. The number of the joined honeycomb units may be determined appropriately depending on the size of the honeycomb structure. The honeycomb joined assembly comprising the honeycomb units joined by interposing the adhesive material may be cut or ground to a desired honeycomb structure shape.

The outer peripheral surfaces (sides) of the honeycomb structure parallel to the longitudinal direction of the cells are coated with a coating material, which is then dried and solidified to form a coating material layer. In this way, the outer peripheral surfaces of the honeycomb structure can be protected and its strength can be enhanced.

The coating material is not particularly limited and may be the same as or differ from the adhesive material. The blending ratio of the coating material may be the same as or different from that of the adhesive material. The thickness of the coating material layer is not particularly limited; preferably, it is in a range of from 0.1 to 2 mm. The coating material layer may be either formed or not formed.

Preferably, the plural honeycomb units joined by the adhesive material are subjected to a heating process. When the coating material layer is provided, the plural honeycomb units, after the formation of the adhesive material layer and the coating material layer, are preferably degreased. By degreasing, the organic binder that may be contained in the adhesive material layer or the coating material layer can be degreased. The degrease conditions may be determined as needed depending on the kind or amount of organic matter contained, and may preferably include the temperature of about 700°C and the duration of about two hours.

The honeycomb structure 1 shown in FIG. 1A is made of a plurality of rectangular-shaped honeycomb units 2 with a square cross section perpendicular to the longitudinal direction of the cells, having a cylindrical outer shape. The honeycomb units 2 are joined by interposing the adhesive material 5. The outer periphery of the honeycomb structure 1 is coated with the coating material layer 6 after the assembled structure is cut into a cylindrical shape. Alternatively, honeycomb units with sectoral or square cross sections may be manufactured and then joined to obtain a honeycomb structure with a predetermined shape, so that the cutting or grinding steps can be omitted.

In the following, a description is given of a process of manufacturing a honeycomb structure constructed of a single honeycomb unit as shown in FIG. 1B. The honeycomb structure shown in FIG. 1B can be manufactured in the same manner as the honeycomb structure of FIG. 1A, with the exception that the honeycomb structure is made of a single honeycomb unit. Namely, the honeycomb unit is cut and/or ground into a cylindrical shape in the same manner as in the case of the honeycomb structure constructed of plural honeycomb units. The outer periphery of the cylindrical honeycomb unit is then coated with the same adhesive material as mentioned above in the same manner as described above, thereby forming a coating material layer, followed by a degreasing step. In this way, the honeycomb structure constructed of a single honeycomb unit as shown in FIG. 1B can be manufactured.

### Examples

In the following, examples of honeycomb structures manufactured under various conditions are described. The present invention, however, are not limited to any of those examples.

### Example 1

### (Manufacturing of Honeycomb Unit)

A container for preparing a molding mixture composition was charged with 2250 parts by mass of Fe ion-exchanged zeolite β (Fe ion-exchanged amount: 3 mass%, silica/alumina ratio: 40, specific surface area: 110 m²/g, average particle size (of secondary particles; same below): 2 µm), 550 parts by mass of γ alumina (average particle size: 2 µm), 2600 parts by mass of alumina sol (solid concentration: 20 mass%), 780 parts by mass of alumina fiber (average fiber diameter: 6 µm, average fiber length: 100 µm, fiber length distribution (=(D90-D10)/D50): 1.5), and 410 parts by mass of methylcellulose as an organic binder. The components were then mixed.

The alumina fibers had been pulverized in a roll mill (MRCA-1 roll crusher from Makino Corporation, with clearance 0.3 mm at 180 rpm; repeated four times), and then had their grain size distribution made uniform by sieving with a gyro-sifter type classifier.

Small amounts of plasticizer, surfactant, and lubricant were further added, and the mixture was mixed and kneaded while adjusting the viscosity by adding water, thereby obtaining a molding mixture composition. The mixture composition was extrusion-molded with an extrusion molding machine, obtaining a honeycomb molded body.

The resultant honeycomb molded body was sufficiently dried using a microwave drying apparatus and a hot air drying apparatus, and degreased at 400°C for two hours. Thereafter, the honeycomb molded body was maintained at 700°C for two hours for firing, thus manufacturing a rectangular-shaped honeycomb unit (cross section 35 mm × 35 mm × length 150 mm), with a rectangular (square) cell shape. The thus manufactured rectangular-shaped honeycomb unit had an opening ratio of 60%, a cell density of 78 cells/cm², and a cell wall thickness of 0.25 mm. The Fe ion-exchanged zeolite had been Fe ion-exchanged by immersing zeolite particles in an iron nitrate ammonium solution. The ion-exchanged amount was determined by ICP emission spectrometry using the ICPS-8100 spectrometer from Shimadzu Corporation.

The average fiber length and the fiber length distribution ((D90-D10)/D50) of the raw material inorganic fibers used for manufacturing the honeycomb unit are shown in Table 1 below.

**Table 1**

| | Fibers (raw material) | | Evaluation | |
|---|---|---|---|---|
| | Ave.length (µm) | Distribution (D90-D10)/D50 | Moldability (clogging) | Strength (Mpa) |
| Ex. 1 | 30 | 1.5 | Good | 4.6 |
| Ex. 2 | 30 | 2.0 | Good | 4.4 |
| Ex. 3 | 100 | 1.5 | Good | 5.6 |
| Ex. 4 | 100 | 2.0 | Good | 5.2 |
| Ex. 5 | 150 | 1.5 | Good | 6.3 |
| Ex. 6 | 150 | 2.0 | Good | 5.7 |
| Comp.Ex. 1 | 30 | 2.8 | Good | 3.5 |
| Comp.Ex. 2 | 100 | 2.8 | Poor | 4.0 |
| Comp.Ex. 3 | 150 | 2.8 | Poor | 4.2 |
| Comp.Ex. 4 | 100 | 2.3 | Poor | 4.4 |

### (Manufacturing of Honeycomb Structure)

A plurality of the aforementioned rectangular-shaped honeycomb units (cross section 35 mm × 35 mm × length 150 mm) were manufactured, and their sides were coated with an adhesive material paste to a thickness of 1 mm. The honeycomb units were joined in 4 rows × 4 columns, and dried and solidified at 120°C, obtaining a substantially rectangular-shaped honeycomb joined assembly.

The adhesive material paste had been prepared by mixing 29 mass% of alumina particles (average particle size: 2 µm), 7 mass% of alumina fibers (average fiber diameter: 6 µm, average fiber length: 100 µm), 34 mass% of alumina sol (solid concentration: 20 mass%), 5 mass% of carboxymethyl cellulose, and 25 mass% of water.

The side walls of the prepared honeycomb joined assembly were cut with a diamond cutter to obtain a cylindrical assembly. The outer surfaces of the cylindrical assembly were then coated with the aforementioned adhesive material paste to a thickness of 0.5 mm, thus preparing a cylindrical honeycomb joined assembly with the same shape as shown in FIG. 1A. The cylindrical honeycomb joined assembly was then dried at 120°C and solidified, followed by degreasing of the adhesive material layer and the coating material at 700°C for 2 hours. Thus, a cylindrical honeycomb structure (with a diameter of about 144 mm × length of 150 mm) was manufactured.

### Examples 2 to 6 and Comparative Examples 1 to 4

Honeycomb units according to Examples 2 to 6 and Comparative Examples 1 to 4 were manufactured under the same conditions as those of Example 1, with the exception that the average fiber length of alumina fibers and the fiber length distribution were varied as shown in Table 1.

### (Evaluation of Bending Strength of Honeycomb Unit)

The bending strength of the honeycomb units according to Examples 1 to 6 and Comparative Examples 1 to 4 was evaluated. The bending strength of the honeycomb units was measured by the three-point bending test in accordance with JIS-R1601. Specifically, the Instron 5582 testing machine was used to apply a breaking load W to the honeycomb structure vertically, with the span L=135 mm and at a cross-head speed of 1 mm/min. For the calculation of the bending strength σ, a cross-section second moment Z was calculated by subtracting the moment of the hollow portions of the cells in advance, and the bending strength σ was calculated by an equation σ=WL/4Z.

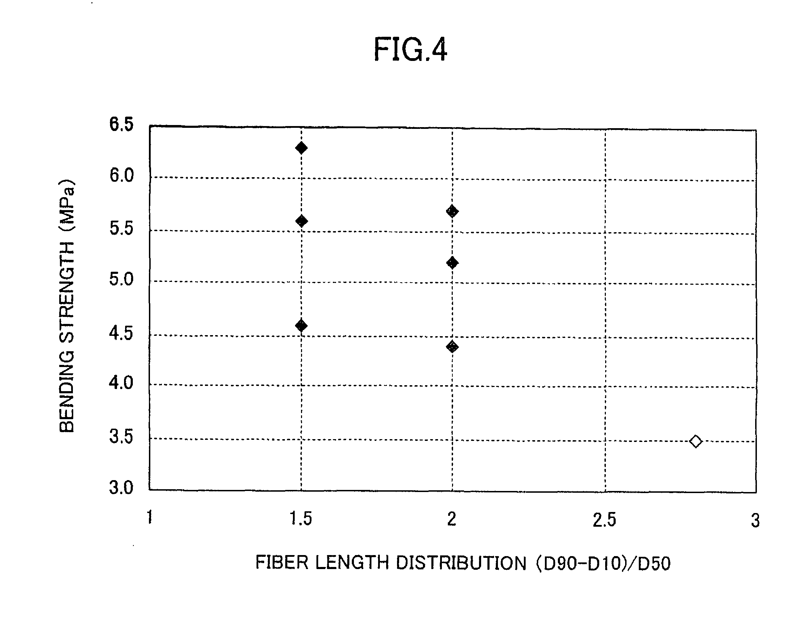

Table 1 also shows the results of evaluation of the bending strength of the honeycomb units according to Examples 1 to 6 and Comparative Examples 1 to 4. The results of measuring the bending strength of the honeycomb units according to Examples 1 to 6 and Comparative Example 1 are shown in a graph of FIG. 4. In the graph of FIG. 4, the horizontal axis shows the fiber length distribution (D90-D10)/D50, and the vertical axis shows the bending strength (MPa) of the honeycomb units, where the solid squares indicate Examples 1 to 6 and the blank square indicates Comparative Example 1. Comparative Example 1 is shown because it exhibited no clogging in a moldability evaluation (clogging determination), as will be described later.

As will be seen from the results shown in Table 1, the honeycomb units of Examples 1 to 6 exhibited bending strength values as high as 6.3 MPa, whereas the bending strength of the honeycomb unit of Comparative Example 1 was much smaller at 3.5MPa. Thus, it can be seen that the honeycomb units of Examples 1 to 6 are suitable for vehicle-mounted exhaust gas conversion catalysts.

### (Evaluation of Moldability of Honeycomb Unit)

Moldability of the honeycomb units was evaluated based on the extent of clogging of the molding mixture composition (raw material) during extrusion molding in the process of manufacturing the honeycomb units according to Examples 1 to 6 and Comparative Examples 1 to 4.

In the process of manufacturing of the honeycomb unit, when the honeycomb unit molded body is extrusion-molded by an extrusion molding machine, the die of the extrusion molding machine may be partly clogged by the molding mixture composition due to solidified inorganic fibers. If this happens, the cell walls of the honeycomb unit molded body may partly fail to be formed, creating a so-called "cell defect". When a cell defect occurs, the operation of the extrusion molding machine needs to be stopped to remove the clogging in the die.

In Examples 1 to 6 and Comparative Examples 1 to 4, the moldability of the molding mixture composition was considered "Poor", as shown in Table 1, when the operation of the extrusion molding machine was stopped even once during the formation of 100 honeycomb unit molded bodies due to a cell defect caused by the clogged die. The moldability of the molding mixture composition was considered "Good" when 100 honeycomb unit molded bodies were formed without a cell defect caused by the clogging of the molding mixture composition.

As seen from the results shown in Table 1, there were no cell defects in Examples 1 to 6 and Comparative Example 1, while cell defects occurred in Comparative Examples 2 to 4. Thus, cell defects can be reliably prevented by employing inorganic fibers where the value of the fiber length distribution (D90-D10)/D50 is two or less. Thus, a honeycomb unit with high strength can be efficiently manufactured by using such fibers.

The honeycomb structures according to various embodiments of the present invention comprise one or more honeycomb units having high strength, and can be used for automobile exhaust gas conversion catalysts, which are required to be small in size and weight.

## Claims

1. A honeycomb structure comprising a
honeycomb unit having inorganic particles, an inorganic binder, and inorganic fibers, the honeycomb unit having plural cells extending in a longitudinal direction from one end face of the honeycomb unit to another end face, the cells being divided by a cell wall,
wherein the honeycomb unit is formed by extrusion molding of a material paste containing the inorganic fibers, and
the value of (D90-D10)/D50, which indicates the length distribution of the inorganic fibers in the material paste, is two or less, where D10, D50 and D90 are fiber lengths which are defined such that 10% by volume of the inorganic fibers have a length equal to or less than D10, 50% by volume of the inorganic fibers have a length equal to or less than D50 and 90% by volume of the inorganic fibers have a length equal to or less than D90, where D10 < D50 < D90, **characterized in that**
the honeycomb unit has a zeolite content in a range between 60 to 80 wt%,
the inorganic fibers have an average fiber length in a range of from 30 to 150 µm and an average fiber diameter in a range of from 4 to 7 µm, and
the cell wall has a thickness in a range of from 0.15 to 0.35 mm.

2. The honeycomb structure according to claim 1, wherein the inorganic fibers include at least one of alumina fibers, silica fibers, silicon carbide fibers, silica alumina fibers, glass fibers, potassium titanate fibers, or aluminum borate fibers.

3. The honeycomb structure according to claim 1 or 2, wherein the inorganic particles include at least one of alumina, titania, silica, zirconia, or ceria in addition to zeolite.

4. The honeycomb structure according to any one of claims 1 to 3, wherein the zeolite includes secondary particles, the secondary particles of zeolite having an average particle size in a range of from 0.5 to 10 µm.

5. The honeycomb structure according to any one of claims 1 through 4, wherein the zeolite includes at least one of zeolite β, zeolite Y, ferrierite, ZSM-5, mordenite, faujasite, zeolite A, or zeolite L.

6. The honeycomb structure according to any one of claims 1 through 5, wherein the zeolite has a silica to alumina molar ratio in a range of from 30:1 to 50:1.

7. The honeycomb structure according to any one of claims 1 through 6, wherein the zeolite is ion-exchanged with at least one of Fe, Cu, Ni, Co, Zn, Mn, Ti, Ag, or V.

8. The honeycomb structure according to any one of claims 1 through 7, wherein the inorganic binder includes at least one of alumina sol, silica sol, titania sol, liquid glass, sepiolite sol, or attapulgite sol.

9. The honeycomb structure according to any one of claims 1 through 8, wherein a plurality of the honeycomb units are joined by interposing an adhesive material.

## Patentansprüche

1. Wabenstruktur mit einer
Wabeneinheit mit anorganischen Partikeln, einem anorganischen Bindemittel und anorganischen Fasern, wobei die Wabeneinheit mehrere Zellen aufweist, die sich in einer Längsrichtung von einer Endfläche der Wabeneinheit zu einer anderen Endfläche erstrecken, wobei die Zellen durch eine Zellwand abgetrennt werden,
wobei die Wabeneinheit durch Extrusionsformen einer Materialpaste ausgebildet wurde, welche die anorganischen Fasern enthält und
wobei der Wert des (D90-D10)/D50, welcher die Längenverteilung der anorganischen Fasern in der Materialpaste bezeichnet, zwei oder weniger ist, wobei D10, D50 und D90 Faserlängen sind, die so definiert sind, dass 10 Volumenprozent der anorganischen Fasern eine Länge kleiner oder gleich D10 haben, 50 Volumenprozent der anorganischen Fasern eine Länge kleiner oder gleich D50 haben, und 90 Volumenprozent der anorganischen Fasern eine Länge kleiner oder gleich D90 haben, wobei D10 < D50 < D90, **dadurch gekennzeichnet, dass**
die Wabeneinheit einen Zeolithgehalt in einem Bereich von 60-80 Gewichtsprozent aufweist,
die anorganischen Fasern eine durchschnittliche Faserlänge in einem Bereich von 30-150 µm und einen durchschnittlichen Faserdurchmesser in einem Bereich von 4 bis 7 µm aufweisen und
die Zellwand eine Dicke in einem Bereich von zwischen 0,15 bis 0,35 mm aufweist.

2. Wabenstruktur nach Anspruch 1,
bei der die anorganischen Fasern Aluminiumoxidfasern, Siliziumoxidfasern, Siliziumcarbidfasern, Siliziumoxid-Aluminiumoxidfasern, Glasfasern, Kaliumtitanatfasern und/oder Aluminiumboratfasern aufweisen.

3. Wabenstruktur nach Anspruch 1 oder 2,
bei der die anorganischen Partikel Aluminiumoxid, Titanoxid, Siliziumoxid, Zirkonoxid und/oder Zeroxid zusätzlich zu dem Zeolith aufweisen.

4. Wabenstruktur nach einem der Ansprüche 1 bis 3, bei der das Zeolith sekundäre Partikel enthält, wobei die sekundären Partikel des Zeoliths eine durchschnittliche Partikelgröße in einem Bereich von zwischen 0,5 bis 10 µm aufweisen.

5. Wabenstruktur nach einem der Ansprüche 1 bis 4, bei der das Zeolith Zeolith β, Zeolith Y, Ferrierit, ZSM-5, Mordenit, Faujasit, Zeolith A und/oder Zeolith L aufweist.

6. Wabenstruktur nach einem der Ansprüche 1 bis 5, bei der das Zeolith ein molares Verhältnis von Siliziumoxid zu Aluminiumoxid in einem Bereich von 30:1 bis 50:1 aufweist.

7. Wabenstruktur nach einem der Ansprüche 1 bis 6, bei der das Zeolith mit Fe, Cu, Ni, Co, Zn, Mn, Ti, Ag und/oder V ionengetauscht ist.

8. Wabenstruktur nach einem der Ansprüche 1 bis 7, bei der das anorganische Bindemittel Aluminiumoxidsuspension, Siliziumoxidsuspension, Titanoxidsuspension, Wasserglas, Sepiolitsuspension und/oder Attapulgitsuspension aufweist.

9. Wabenstruktur nach einem der Ansprüche 1 bis 8, bei der mehrere Wabeneinheiten miteinander verbunden sind, indem ein Klebematerial eingefügt wird.

## Revendications

1. Structure en nid d'abeille comprenant une unité en nid d'abeille ayant des particules inorganiques, un liant inorganique, et des fibres inorganiques, l'unité en nid d'abeille ayant plusieurs cellules s'étendant dans une direction longitudinale d'une face extrémité de l'unité en nid d'abeille à l'autre face d'extrémité, les cellules étant divisées par une paroi cellulaire,
où l'unité en nid d'abeille est formée par moulage par extrusion d'une pâte de matériau contenant les fibres inorganiques, et
la valeur de (D90-D10)/D50, qui indique la distribution des longueurs des fibres inorganiques dans la pâte de matériau, est de deux ou moins, où D10, D50 et D90 sont les longueurs de fibres qui sont définies de sorte que 10% en volume des fibres inorganiques ait une longueur inférieure ou égale à D10, 50% en volume des fibres inorganiques ait une longueur inférieure ou égale à D50 et 90% en volume des fibres inorganiques ait une longueur inférieure ou égale à D90, où D10 < D50 < D90,
**caractérisée en ce que**
l'unité en nid d'abeille a une teneur en zéolithe comprise dans une plage allant de 60 à 80% en poids,
les fibres inorganiques ont une longueur moyenne de fibre comprise dans une plage allant de 30 à 150 µm et un diamètre moyen de fibre compris dans une plage allant de 4 à 7 µm, et
la paroi cellulaire a une épaisseur comprise dans une plage allant de 0,15 à 0,35 mm.

2. Structure en nid d'abeille selon la revendication 1, dans laquelle les fibres inorganiques comprennent au moins les unes parmi les fibres d'alumine, les fibres de silice, les fibres de carbure de silicium, les fibres de silice-alumine, les fibres de verre, les fibres de titanate de potassium, ou les fibres de borate d'aluminium.

3. Structure en nid d'abeille selon la revendication 1 ou 2, dans laquelle les particules inorganiques comprennent au moins un élément parmi l'alumine, l'oxyde de titane, la silice, la zircone, ou l'oxyde de cérium en plus de la zéolithe.

4. Structure en nid d'abeille selon l'une quelconque des revendications 1 à 3, dans laquelle la zéolithe comprend des particules secondaires, les particules secondaires de zéolithe ayant une taille particulaire moyenne comprise dans une plage allant de 0,5 à 10 µm.

5. Structure en nid d'abeille selon l'une quelconque des revendications 1 à 4, dans laquelle la zéolithe comprend au moins un élément parmi la zéolithe β, la zéolithe Y, la ferriérite, la ZSM-5, la mordénite, la faujasite, la zéolithe A, ou la zéolithe L.

6. Structure en nid d'abeille selon l'une quelconque des revendications 1 à 5, dans laquelle la zéolithe a un rapport molaire silice sur alumine compris dans une plage allant de 30:1 à 50:1.

7. Structure en nid d'abeille selon l'une quelconque des revendications 1 à 6, dans laquelle la zéolithe a subi un échange d'ions avec au moins un élément parmi les Fe, Cu, Ni, Co, Zn, Mn, Ti, Ag, ou V.

8. Structure en nid d'abeille selon l'une quelconque des revendications 1 à 7, dans laquelle le liant inorganique comprend au moins un sol d'alumine, un sol de silice, un sol d'oxyde de titane, du silicate de sodium, un sol de sépiolite, ou un sol d'attapulgite.

9. Structure en nid d'abeille selon l'une quelconque des revendications 1 à 8, dans laquelle plusieurs unités en nid d'abeille sont assemblées par l'interposition d'un matériau adhésif.
